# EUROPÄISCHE PATENTSCHRIFT

(11) **EP 2 694 577 B1**
(45) Veröffentlichungstag und Bekanntmachung des Hinweises auf die Patenterteilung: **08.04.2015**
(21) Anmeldenummer: 12720201.8
(22) Anmeldetag: 11.05.2012
(51) Int. Cl.: C08K 3/04, C08L 71/00, C08L 81/02, C08L 81/06

(54) **THERMOPLASTISCHE FORMMASSE AUS POLYARYLENETHERN UND POLYPHENYLENSULFID MIT VERBESSERTER VERARBEITUNGSSTABILITÄT**
THERMOPLASTIC MOULDING COMPOSITION MADE OF POLYARYLENE ETHERS AND POLYPHENYLENE SULPHIDE WITH IMPROVED PROCESSING STABILITY
MATIÈRE À MOULER THERMOPLASTIQUE À BASE D'ÉTHERS DE POLYARYLÈNE ET DE SULFURE DE POLYPHÉNYLÈNE PRÉSENTANT UNE STABILITÉ AU TRAITEMENT AMÉLIORÉE

(30) Priorität: 18.05.2011 EP 11166580
(43) Veröffentlichungstag der Anmeldung: 12.02.2014
(73) Patentinhaber: BASF SE, 67056 Ludwigshafen (DE)
(72) Erfinder: WEBER, Martin, 67487 Maikammer (DE); MALETZKO, Christian, 67122 Altrip (DE); HENNENBERGER, Florian, 64646 Heppenheim (DE)
(86) Internationale Anmeldenummer: PCT/EP2012/058820
(87) Internationale Veröffentlichungsnummer: WO 2012/156327

(56) Entgegenhaltungen:
- EP-A1- 1 854 845
- EP-A2- 2 000 509
- JP-A- 2005 105 024

## Beschreibung

Die vorliegende Erfindung betrifft eine thermoplastische Formmasse, die folgende Komponenten enthält
A) von 10 bis 50 Gew.-% mindestens eines Polyarylenethers mit im Mittel höchstens 0,5 phenolischen Endgruppen pro Polymerkette und ohne Carboxygruppen,
B) von 5 bis 44,5 Gew.-% mindestens eines Polyphenylensulfids,
C) von 10 bis 65 Gew.-% mindestens eines faser- und/oder teilchenförmigen Füllstoffs
D) von 0,5 bis 20 Gew.-% eines elastischen Graphits mit einer Elastizität von 60 bis 130%
E) von 0 bis 20 Gew.-% mindestens eines Polyarylenethers umfassend Carboxygruppen,
F) von 0 bis 20 Gew.-% mindestens eines Polyarylenethers mit im Mittel mindestens 1,5 phenolischen Endgruppen pro Polymerkette und ohne Carboxygruppen,
G) von 0 bis 40 Gew.-% mindestens eines Zusatzstoffs
wobei die Summe der Gewichtsanteile der Komponenten A) bis G) 100 Gew.-% bezogen auf die Formmasse ergibt.

Weiterhin betrifft die vorliegende Erfindung die Verwendung der thermoplastischen Formmasse als Überzugmittel und zur Herstellung von Fasern, Folien oder Formkörpern sowie Fasern, Folien oder Formkörper enthaltend eine solche thermoplastische Formmasse.

Bevorzugte Ausführungsformen sind den Ansprüchen und der Beschreibung zu entnehmen. Kombinationen bevorzugter Ausführungsformen fallen in den Rahmen der vorliegenden Erfindung.

Der Bedarf an Hochleistungsthermoplasten ist von wachsendem Interesse, wobei insbesondere Formmassen mit einer hohen Wärmeformbeständigkeit, guter mechanischer Verarbeitbarkeit und inhärenter Flammwidrigkeit gefragt sind.

Polyarylenether zeichnen sich durch eine hohe Wärmeformbeständigkeit, gute mechanische Eigenschaften und inhärente Flammwidrigkeit aus.

Allerdings sind Polyarylenether amorph und weisen daher zum Teil geringe Beständigkeit gegenüber aggressiven Medien auf. Weiterhin weisen Polyarylenether auch hohe Schmelzeviskosität auf, was besonders die Verarbeitung zu großen Formteilen mittels Spritzguss beeinträchtigt. Die hohe Schmelzeviskosität ist auch nachteilig bei der Herstellung von Formmassen mit hoher Füllstoff- oder Faserbeladung.

Bekannt sind thermoplastische Formmassen aus Polyarylenethern, Polyphenylensulfden und Kautschuk, die gemäß der Beschreibung eine verbesserte Fließfähigkeit und gute Chemikalienbeständigkeit aufweisen (EP 673 973). Als Zusatzstoff können die thermoplastischen Formmassen Kohlenstofffasern enthalten.

Die Schrift GB A 2 113 235 offenbart wiederum thermoplastische Formmassen, die Polyphenylensulfide und Polyarylenether mit Hydroxygruppen umfassen.

Aus der EP 855 428 und der EP 903 376 sind faserverstärkte Polyarylenether bekannt, die neben funktionalisierten Polyarylenethern Kautschuke enthalten.

Die Aufgabe der Erfindung bestand darin, eine thermoplastische Formmasse zur Verfügung zu stellen, die eine verbesserte Verarbeitbarkeit aufweist. Insbesondere sollte die Verarbeitbarkeit in der Schmelze bei hoher Faserbeladung verbessert werden.

Die resultierende thermoplastische Formmasse sollte sich darüber hinaus durch gute mechanische Eigenschaften wie Reißdehnung und/oder Reißfestigkeit auszeichnen.

Demgemäß wurde die eingangs definierte thermoplastische Formmasse gefunden.

### Komponente A

Erfindungsgemäß enthält die thermoplastische Formmasse mindestens einen oder mehrere, vorzugsweise aber einen Polyarylenether (A) mit im Mittel höchstens 0,5 phenolischen Endgruppen pro Polymerkette. Der Ausdruck "im Mittel" bedeutet dabei ein Zahlenmittel.

Komponente A) liegt in den erfindungsgemäßen thermoplastischen Formmassen vorzugsweise in Mengen von 10 bis 50 Gew.-%, besonders bevorzugt von 14 bis 45 Gew.-%, insbesondere von 20 bis 45 Gew.-%, ganz besonders bevorzugt von 30 bis 45 Gew.-% vor, wobei die Summe der Gewichtsanteile der Komponenten A) bis G) 100 Gew.-% bezogen auf die Formmasse ergibt.

Es ist für den Fachmann offensichtlich, dass die phenolischen Endgruppen reaktiv sind und in den thermoplastischen Formmassen in mindestens teilweise umgesetzter Form vorliegen können. Die thermoplastischen Formmassen werden vorzugsweise durch Compoundierung, d. h. durch Vermischen der Komponenten in einem fließfähigen Zustand hergestellt.

Unter phenolischer Endgruppe wird im Rahmen der vorliegenden Erfindung eine Hydroxygruppe verstanden, die an einen aromatischen Kern gebunden ist und die gegebenenfalls auch deprotoniert vorliegen kann. Es ist dem Fachmann bekannt, dass eine phenolische Endgruppe durch Abspaltung eines Protons infolge Einwirkung einer Base auch als sogenannte Phenolatendgruppe vorliegen kann. Der Begriff phenolische Endgruppen umfasst somit ausdrücklich sowohl aromatische OH- als auch Phenolatgruppen.

Die Bestimmung des Anteils der phenolischen Endgruppen erfolgt vorzugsweise durch potentiometrische Titration. Hierfür wird das Polymer in Dimethylformamid gelöst und mit einer Lösung von Tetrabutylammoniumhydroxid in Toluol/Methanol titriert. Die Endpunktserfassung erfolgt potentiometrisch. Die Bestimmung des Anteils an Halogenendgruppen erfolgt vorzugsweise mittels Atomspektroskopie.

Aus dem Gewichtsanteil phenolischer Endgruppen bezogen auf das Gesamtgewicht des Polymers (m^{OH}) und dem zahlenmittleren Molekulargewicht (Mₙ^{P}) kann der Fachmann nach bekannten Methoden die mittlere Zahl an phenolischen Endgruppen pro Polymerkette (n^{OH}) unter der Annahme strikt linearer Polymerketten nach folgender Formel ermitteln: n^{OH} = m^{OH} [in Gew.-%] /100 * Mₙ^{P} [in g/mol] * 1/17.

Alternativ kann die mittlere Zahl von phenolischen Endgruppen pro Polymerkette (n^{OH}) unter Voraussetzung strikt linearer Polymerketten bei gleichzeitiger Kenntnis des Gewichtsanteils an CI-Endgruppen (m^{CI}) unter der Annahme, dass ausschließlich OH- und CI-Endgruppen vorliegen, wie folgt berechnet werden: n^{OH} = 2 / (1 + (17/35,45 * m^{CI} / m^{OH} )). Dem Fachmann ist bekannt, wie die Berechnungsweisen im Fall anderer Endgruppen als CI anzupassen sind.

Die Herstellung von Polyarylenethern bei gleichzeitiger Steuerung der Endgruppen ist dem Fachmann bekannt und wird weiter unten näher beschrieben. Die bekannten Polyarylenether weisen üblicherweise Halogen-, insbesondere -F oder -CI, oder phenolische OH- bzw. Phenolat-Endgruppen auf, wobei letztere als solche oder in umgesetzter Form, insbesondere in Form von -OCH₃-Endgruppen, vorliegen können.

Vorzugsweise weisen die Polyarylenether (A) höchstens 0,01 Gew.-%, besonders bevorzugt höchstens 0,005 Gew.-% phenolische Endgruppen bezogen auf die Gewichtsmenge der Komponente (A) auf.

Die jeweilige Obergrenze für den Gehalt phenolischer Endgruppen in den Komponenten (A) ergibt sich aus der Zahl der zur Verfügung stehenden Endgruppen pro Molekül (zwei im Fall linearer Polyarylenether) und der zahlenmittleren Kettenlänge. Entsprechende Berechnungen sind dem Fachmann bekannt.

Vorzugsweise beträgt die mittlere Anzahl der phenolischen Endgruppen der Komponente (A) pro Polymerkette von 0 bis 0,2, insbesondere von 0 bis 0,1, besonders bevorzugt von 0 bis 0,05, ganz besonders bevorzugt von 0 bis 0,02, insbesondere bevorzugt höchstens 0,01.

Polyarylenether sind dem Fachmann als Polymerklasse bekannt. Im Prinzip kommen alle dem Fachmann bekannten und/oder nach bekannten Methoden herstellbaren Polyarylenether als Komponente (A) in Betracht. Entsprechende Methoden werden weiter unten erläutert.

Bevorzugte Polyarylenether (A) sind aus Bausteinen der allgemeinen Formel I aufgebaut: 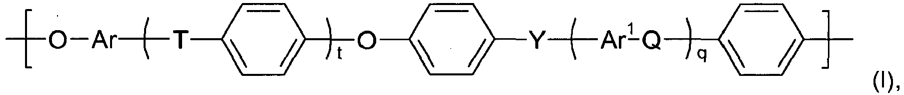 wobei die Symbole t, q, Q, T, Y, Ar und Ar¹ folgende Bedeutungen aufweisen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂- S=O, C=O, -N=N- und -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
- Ar, Ar¹:: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylenether (A) sind solche, die mindestens eine der folgenden Bausteine la bis lo als wiederkehrende Struktureinheiten enthalten:

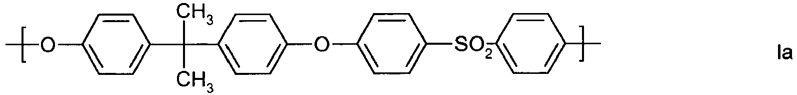

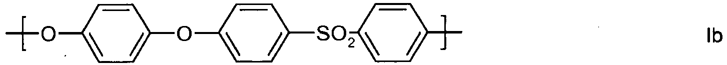

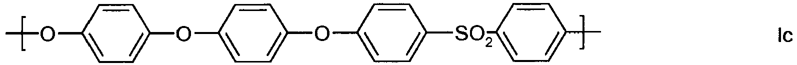

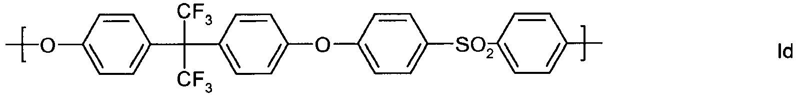

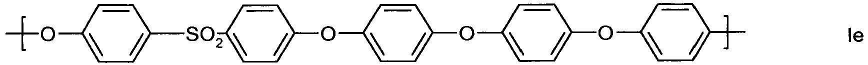

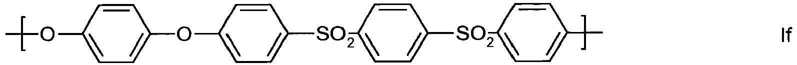

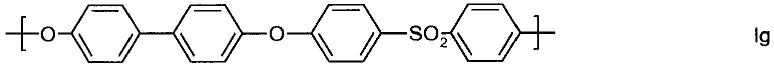

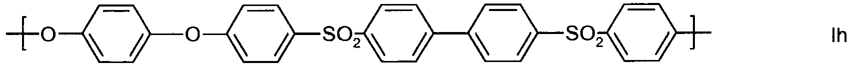

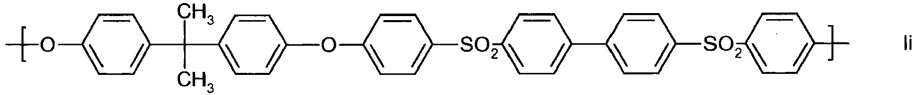

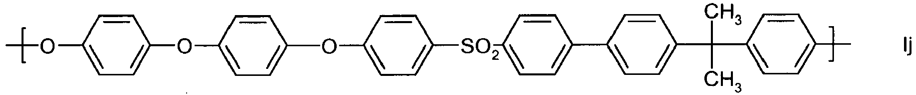

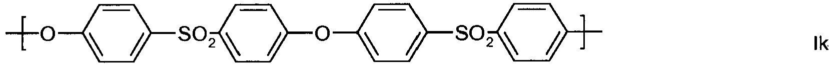

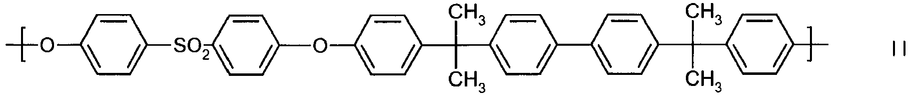

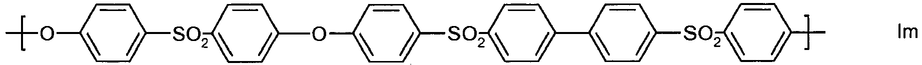

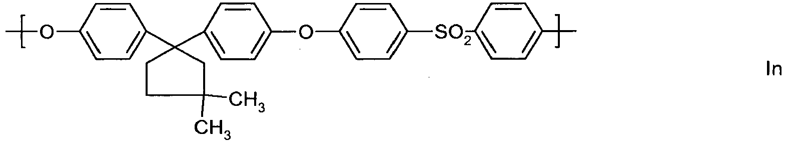

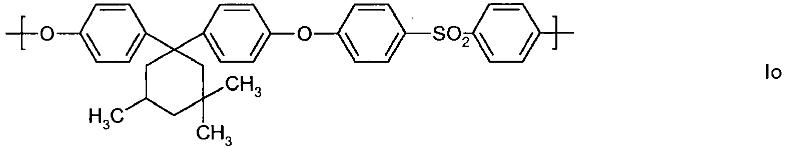

Zusätzlich zu den bevorzugten Bausteinen la bis lo sind auch solche Bausteine bevorzugt, in denen eine oder mehrere 1,4-Phenyleneinheiten, die von Hydrochinon abstammen, durch 1,3-Phenyleneinheiten, die von Resorcin abstammen- oder durch Naphthyleneinheiten, die von Dihydroxynaphthalin abstammen, ersetzt sind.

Als Bausteine der allgemeinen Formel I besonders bevorzugt sind die Bausteine la, Ig und Ik. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus la, Ig und Ik aufgebaut sind.

In einer besonders bevorzugten Ausführungsform ist Ar = 1,4-Phenylen, t = 1, q = 0, T ist eine chemische Bindung und Y = SO₂. Aus der vorgenannten Wiederholungseinheit aufgebaute besonders bevorzugte Polyarylenethersulfone (A) werden als Polyphenylensulfon (PPSU) bezeichnet (Formel Ig).

In einer weiteren besonders bevorzugten Ausführungsform ist Ar = 1,4-Phenylen, t = 1, q = 0, T = C(CH₃)₂ und Y = SO₂. Aus der vorgenannten Wiederholungseinheit aufgebaute besonders bevorzugte Polyarylenethersulfone (A) werden als Polysulfon (PSU) bezeichnet (Formel Ia).

In einer weiteren besonders bevorzugten Ausführungsform ist Ar = 1,4-Phenylen, t = 1, q = 0, T = Y = SO₂. Aus der vorgenannten Wiederholungseinheit aufgebaute besonders bevorzugte Polyarylenethersulfone (A1) werden als Polyethersulfon (PESU) bezeichnet (Formel Ik). Diese Ausführungsform ist ganz besonders bevorzugt. Abkürzungen wie PPSU, PESU und PSU entsprechen im Rahmen der vorliegenden Erfindung der DIN EN ISO 1043-1:2001.

Die Polyarylenether (A) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Darüber hinaus weist der Polyarylenether (A) vorzugsweise eine scheinbare Schmelzviskosität bei 350 °C/1150 s⁻¹ von 150 bis 300 Pa s, bevorzugt von 150 bis 275 Pa s auf.
Die Fließfähigkeit wurde anhand der Schmelzeviskosität beurteilt. Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150 s⁻¹ bestimmten Werte.

Herstellungsverfahren, die zu den vorgenannten Polyarylenethern führen, sind dem Fachmann an sich bekannt und beispielsweise in Herman F. Mark, "Encyclopedia of Polymer Science and Technology", third edition, Volume 4, 2003, Kapitel "Polysulfones" auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Vorzugsweise weisen die Polyarylenether (A) entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente (A) sind Halogen, insbesondere Chlor, Alkoxy, insbesondere Methoxy, Aryloxy, insbesondere Phenoxy, oder Benzyloxy.

### Komponente B

Die erfindungsgemäße Formmasse enthält als Komponente (B) mindestens ein oder mehrere, vorzugsweise aber ein Polyarylensulfid. Als Komponente (B) kommen prinzipiell alle Polyarylensulfide in Betracht.

Komponente (B) liegt in den erfindungsgemäßen thermoplastischen Formmassen vorzugsweise in Mengen von 5 bis 44,5 Gew.-%, besonders bevorzugt von 5 bis 30 Gew.-%, insbesondere von 5 bis 20 Gew.-%, ganz besonders bevorzugt von 10 bis 20 Gew.-% vor, wobei die Summe der Gewichtsanteile der Komponenten A) bis G) 100 Gew.-% bezogen auf die Formmasse ergibt.

Vorzugsweise bestehen die Polyarylensulfide der Komponente (B) von 30 bis 100 Gew.-% aus Wiederholungseinheiten gemäß der allgemeinen Formel -Ar-S-, wobei-Ar- eine Arylengruppe mit 6 bis 18 Kohlenstoffatomen darstellt.

Bevorzugt werden Polyarylensulfide, die mindestens 30 Gew.-%, insbesondere mindestens 70 Gew.-% Wiederholungseinheiten II:

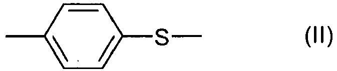

Bezogen auf das Gesamtgewicht aller Wiederholungseinheiten enthalten. Geeignete weitere Wiederholungseinheiten sind insbesondere 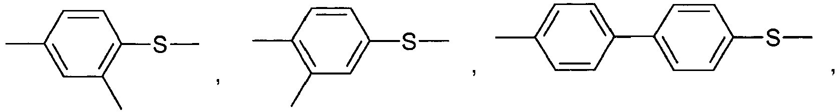 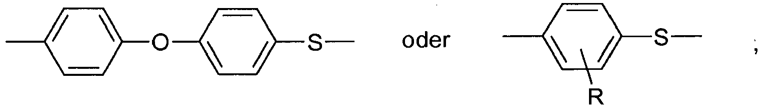 worin R C₁- bis C₁₀-Alkyl, bevorzugt Methyl bedeutet. Die Polyarylensulfide können Homopolymere, statistische Copolymere oder Blockcopolymere sein, wobei Homopolymere (identische Wiederholungseinheiten) bevorzugt sind. Ganz besonders bevorzugte Polyarylensulfide bestehen zu 100 Gew.-% aus Wiederholungseinheiten gemäß der allgemeinen Formel II. Besonders bevorzugt ist Komponente (B) somit ein Polyphenylensulfid, insbesondere Poly(1,4-phenylensulfid).

Als Endgruppen der erfindungsgemäß verwendeten Polyarylensulfide kommen insbesondere Halogen, Thiol oder Hydroxy, bevorzugt Halogen in Betracht.

Die Polyarylensulfide der Komponente (B) können verzweigt oder unverzweigt sein. Vorzugsweise sind die Polyarylensulfide der Komponente (B) linear, d. h. nicht verzweigt.

Die Polyarylensulfide der Komponente (B) weisen vorzugsweise gewichtsmittlere Molekulargewichte von 5.000 bis 100.000 g/mol auf.
Die Polyarylensulfide der Komponente B) weisen vorzugsweise eine scheinbare Schmelzviskosität bei 350 °C/1150 s⁻¹ von 40 bis 200 Pa s, bevorzugt von 40 bis 180 Pa s auf.
Die Fließfähigkeit wurde anhand der Schmelzeviskosität beurteilt. Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150 Hz bestimmten Werte.

Derartige Polyarylensulfide sind an sich bekannt oder können nach bekannten Methoden hergestellt werden. Entsprechende Herstellungsmethoden sind beispielsweise in Hans R. Kricheldorf, "Aromatic Polyethers" in: Handbook of Polymer Synthesis, second edition, 2005 auf den Seiten 486 bis 492 beschrieben.

Insbesondere können sie, wie in der US 2,513,188 beschrieben, durch Umsetzen von Halogenaromaten mit Schwefel oder Metallsulfiden hergestellt werden. Ebenso ist es möglich, Metallsalze von mit Halogen substituierten Thiophenolen zu erhitzen (siehe GB-B 962 941). Zu den bevorzugten Synthesen von Polyarylensulfiden zählt die Umsetzung von Alkalimetallsulfiden mit Halogenaromaten in Lösung, wie sie z.B. der US 3,354,129 zu entnehmen ist. Weitere Verfahren sind in der US 3,699,087 und in der US 4,645,826 beschrieben.

### Komponente C

Die thermoplastischen Formmassen der vorliegenden Erfindung enthalten als Komponente (C) vorzugsweise mindestens einen oder mehrere, vorzugsweise aber einen faser- und/oder teilchenförmigen Füllstoff.

Der faser- und/oder teilchenförmige Füllstoff liegt in einer Menge von 10 bis 65 Gew.-%, bevorzugt in einer Menge von 15 bis 65 Gew.-%, ganz besonders bevorzugt von 15 bis 60 Gew.-%, insbesondere von 15 bis 50 Gew.-%, wobei die Summe der Gewichtsanteile der Komponenten A) bis G) 100 Gew.-% bezogen auf die Formmasse ergibt.

Die erfindungsgemäßen Formmassen können insbesondere teilchenförmige oder faserförmige Füllstoffe enthalten, wobei faserförmige Füllstoffe besonders bevorzugt sind. Komponente (C) umfasst allerdings kein Graphit.

Bevorzugte faserförmige Füllstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im Allgemeinen haben die verwendeten Kohlenstoff- und Glasfasern einen Durchmesser im Bereich von 6 bis 20 µm. Komponente (C) besteht besonders bevorzugt aus Glasfasern.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 5 mm.

Kohlenstoff- oder Glasfasern können auch in Form von Geweben, Matten oder Glasseidenrovings eingesetzt werden.

Bevorzugt sind Schnittglasfasern, die mit einer Polyurethanschlichte, einer Epoxyschlichte oder Polyesterschlichte versehen sind. Insbesondere sind Schnittglasfasern, die mit einer Polyurethanschlichte, einer Epoxyschlichte oder Polyesterschlichte versehen sind, im Längenbereich von 6 bis 20 µm bevorzugt.

Als teilchenförmige Füllstoffe eignen sich amorphe Kieselsäure, Carbonate wie Magnesiumcarbonat und Kreide, gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Aluminiumsilikate wie Kaolin, besonders kalzinierter Kaolin.

Bevorzugte teilchenförmige Füllstoffe sind solche, in denen mindestens 95 Gew.-%, bevorzugt mindestens 98 Gew.-% der Teilchen einen Durchmesser (größter Durchmesser durch das geometrische Zentrum), bestimmt am fertigen Produkt, von weniger als 45 µm, bevorzugt weniger als 40 µm aufweisen und deren so genanntes Aspektverhältnis im Bereich von 1 bis 25, bevorzugt im Bereich von 2 bis 20 liegt, bestimmt am fertigen Produkt. Das Aspektverhältnis ist das Verhältnis von Teilchendurchmesser zu Dicke (größte Ausdehnung zu kleinster Ausdehnung jeweils durch das geometrische Zentrum).

Die Teilchendurchmesser können dabei z. B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 µm beträgt, kann auch mittels Siebanalyse gemessen werden.

Besonders bevorzugt werden als teilchenförmige Füllstoffe Talkum, Kaolin, wie kalzinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

### Komponente D

Als Komponente (D) enthalten die erfindungsgemäßen Formmassen mindestens einen oder mehrere, vorzugsweise aber einen elastischen Graphit mit einer Elastizität von 60 bis 130%.

Der elastische Graphit mit einer Elastizität von 60 bis 130% liegt bevorzugt in einer Menge von 0,5 bis 20 Gew.-%, bevorzugt von 1 bis 18 Gew.-%, ganz besonders bevorzugt von 1 bis 15 Gew.-%, insbesondere von 3 bis 10 Gew.-%, wobei die Summe der Gewichtsanteile der Komponenten A) bis G) 100 Gew.-% bezogen auf die Formmasse ergibt.

Unter Graphit ist im Sinne der Erfindung eine hexagonale oder rhomboedrische kristalline stabile Modifikation des Kohlenstoffs zu verstehen.

Die Elastizität des Graphits kann in einem metallischen Zylinder gemessen werden, in dem der Graphit unter einem Druck von 5 bis 70 MPa komprimiert wird. Die Höhe der Graphitsäule unter Druckbelastung und nach Entspannung wird gemessen, aus der Differenz wird die Elastizität berechnet.

Die Dichte des Graphits liegt von 1,9 bis 2,3.

Vorzugsweise wird ein Graphit mit einer Partikelgröße von 2 bis 100 µm, insbesondere von 30 bis 90 µm, ganz besonders von 30 bis 70 µm eingesetzt.

Die Partikelgrößenverteilung kann mittels Laserbeugung in einer hochverdünnten Suspension bestimmt werden. Als Messgerät kann zum Beispiel das Gerät Beckmann LS13320 eingesetzt werden.

Vorzugsweise wird ein Graphit mit einer spezifischen Oberfläche von 5 bis 19 m²/g, vorzugsweise von 10 bis 18 m²/g besonders bevorzugt von 14 bis 18 m²/g verwendet. Die BET-Oberfläche kann gemäß DIN ISO 9277 bestimmt werden.

Graphit ist ein natürlich vorkommender Rohstoff. Das natürlich vorkommende Produkt kann zum Beispiel in Brechern oder Mühlen zerkleinert und durch weitere Verfahrensschritte aufgereinigt werden. Durch thermische Behandlung kann die Reinheit des Produktes erhöht werden. Graphit kann auch durch Verkohlung kohlenstoffhaltiger Produkte wie Kohle Erdöl oder Pech hergestellt werden.

Der verwendete Graphit kann z.B. aus Koks hergestellt werden. In einem ersten Reinigungsschritt erfolgt dabei die Abreicherung flüchtiger Kohlenwasserstoffe und anderer Verunreinigungen. In einem zweiten Schritt, der bei deutlich höherer Temperatur durchgeführt wird, erfolgt eine Graphitisierung. Die Graphitisierung erfolgt bei einer Temperatur oberhalb von 2000°C. Vorzugsweise erfolgt die Herstellung des erfindungsgemäß verwendeten Graphits in einem Flüssigbett, welches eine effiziente Temperaturführung ermöglicht. Besondere Ausführungsformen sind z.B. der US 4,160,813 (unter anderem Sp.5, Z.28 bis Sp.7, Z.37) zu entnehmen.

### Komponente (E)

Vorzugsweise enthält die thermoplastische Formasse mindestens einen oder mehrere, vorzugsweise aber einen funktionalisierten Polyarylenether umfassend Carboxylgruppen.

Komponente (E) liegt in den erfindungsgemäßen thermoplastischen Formmassen vorzugsweise in Mengen von 0 bis 20 Gew.-%, besonders bevorzugt von 0,1 bis 15 Gew.-%, insbesondere von 0,1 bis 10 Gew.-%, ganz besonders bevorzugt von 2 bis 8 Gew.-% vor, wobei die Summe der Gewichtsanteile der Komponenten A) bis G) 100 Gew.-% bezogen auf die Formmasse ergibt.

Insbesondere enthalten die thermoplastischen Formassen mindestens einen funktionalisierten Polyarylenether umfassend Carboxylgruppen mit einer Viskositätszahl gemäß DIN EN ISO 1628-1 von 40 bis 65 ml/g gemessen in 1 gew.-%iger Lösung in N-Methyl-2-pyrrolidon bei 25°C. Die Viskositätszahl gemäß DIN EN ISO 1628-1 der funktionalisierten Polyarylenether der Komponente (E) gemessen in 1 gew.-%iger Lösung in N-Methyl-2-pyrrolidon bei 25°C beträgt vorzugsweise mindestens 46 ml/g, besonders bevorzugt mindestens 47 ml/g, insbesondere mindestens 48 ml/g. Komponente E unterscheidet sich somit von Komponente A insbesondere dadurch, dass Komponente E im Gegensatz zu Komponente A mit Carboxylgruppen funktionalisiert ist.

Die Verwendung von Polyarylenethern umfassend Carboxylgruppen mit einer Viskositätszahl gemäß DIN EN ISO 1628-1 von mehr als 65 ml/g gemessen in 1 gew.-%iger Lösung in N-Methyl-2-pyrrolidon bei 25°C führt im Allgemeinen zu einer nachteiligen Reduktion der Fließfähigkeit, ohne dass eine weitere Verbesserung der mechanischen Eigenschaften erhalten wird. Dementsprechend ist die Viskositätszahl gemäß DIN EN ISO 1628-1 der Polyarylenether der Komponente (E) vorzugsweise nach oben beschränkt und beträgt bevorzugt höchstens 65 ml/g, besonders bevorzugt höchstens 61 ml/g, insbesondere höchstens 57 ml/g, jeweils gemessen in 1 gew.-%iger Lösung in N-Methyl-2-pyrrolidon bei 25°C.
Die Viskositätszahl gemäß DIN EN ISO 1628-1 der Polyarylenether der Komponente (E) kann von 30 bis 65 ml/g, bevorzugt von 35 bis 65 ml/g betragen.

Vorzugsweise enthalten die erfindungsgemäßen thermoplastischen Formmassen als Komponente (E) mindestens einen funktionalisierten Polyarylenether, der Bausteine der allgemeinen Formel I wie im Rahmen von Komponente (A) definiert sowie Bausteine der allgemeinen Formel III enthält: 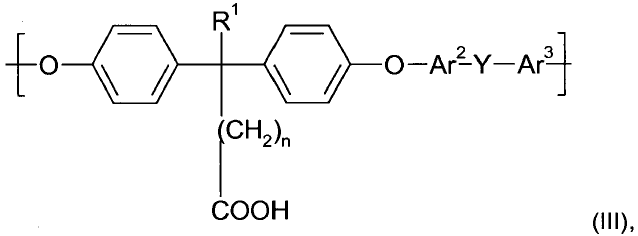 worin
- n: 0, 1, 2, 3, 4, 5 oder 6 ist;
- R¹: Wasserstoff, eine C₁ bis C₆-Alkylgruppe, oder -(CH₂)ₙ-COOH bedeutet;
- Ar² und Ar³: gleich oder unterschiedlich sein können und unabhängig voneinander eine C₆ bis C₁₈-Arylengruppe darstellen und
- Y: eine chemische Bindung oder Gruppe wiedergibt, die ausgewählt ist aus -O-, -S-, -SO₂-, S=O, C=O, -N=N- und -CR^{a}R^{b}-, wobei R^{a} und R^{b} gleich oder ungleich sein können und unabhängig voneinander jeweils für ein Wasserstoffatom oder eine C₁-C₁₂-Alkyl-, C₁-C₁₂-Alkoxy- oder C₆ bis C₁₈-Arylgruppe stehen.

Vorzugsweise beträgt der Anteil von Bausteinen gemäß der allgemeinen Formel III bezogen auf die Summe der Bausteine gemäß Formel I und Formel III von 0,5 bis 3 mol-%, vorzugsweise von 0,6 bis 2 mol-%, besonders bevorzugt von 0,7 bis 1,5 mol-%. Der Anteil von Bausteinen gemäß der allgemeinen Formel III bezogen auf die Summe der Bausteine gemäß Formel I und Formel I wird im Rahmen der vorliegenden Erfindung grundsätzlich mittels ¹H-NMR-Spektroskopie mit einer definierten Menge 1,3,5-Trimethoxybenzol als interner Standard bestimmt. Die Umrechnung von Gew.-% in mol-% ist dem Fachmann bekannt.

Im Rahmen der allgemeinen Formel III gilt vorzugsweise n = 2 und R¹ = Methyl. Im Rahmen der allgemeinen Formel III gilt zudem vorzugsweise Ar² = Ar³ = 1,4-Phenylen und Y = -SO₂-.

Die in den erfindungsgemäßen Formmassen verwendeten, funktionalisierten Polyarylenether (Komponente E) sind an sich bekannte Verbindungen oder sind nach bekannten Verfahren herstellbar.

Beispielsweise sind die funktionalisierten Polyarylenether der Komponente (E) zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach insbesondere erhältlich durch Polykondensation von Verbindungen der allgemeinen Formel IV: 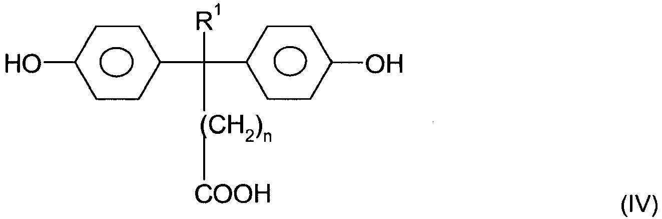 worin R¹ und n die oben angegebenen Bedeutungen besitzen, mit wenigstens einer weiteren gegenüber den Verbindungen der allgemeinen Formel V reaktiven aromatischen Verbindung, wie insbesondere 4,4'-Dichlordiphenylsulfon, und gegebenenfalls weiteren hydroxyfunktionalisierten Verbindungen, wie z.B. Bisphenol A und/oder Bisphenol S und/oder 4,4'-Dihydroxybiphenyl. Geeignete Reaktionspartner sind dem Fachmann allgemein bekannt.

Zur Herstellung der funktionalisierten Polyarylenether der Komponente (E) können prinzipiell auch die für Polyarylenether der Komponente (A) verwendeten Methoden eingesetzt werden, wobei ebenfalls die Lösungspolymerisation in dipolar aprotischen Lösungsmitteln unter Baseneinwirkung bevorzugt wird.

Die Ausführungen bezüglich Komponente (A) hinsichtlich bevorzugter Strukturelemente der allgemeinen Formel I gelten entsprechend für die funktionalisierten Polyarylenether der Komponente (E).

Insbesondere ist es bevorzugt, wenn die Polyarylenether der Komponenten (A) und (E) strukturell ähnlich sind, insbesondere auf den gleichen Monomerbausteinen basieren und sich lediglich in Bezug auf die Bausteine der allgemeinen Formel IV im Rahmen der Komponente (E) unterscheiden. Es ist besonders bevorzugt, wenn sowohl Komponente (A) als auch Komponente (E) auf Bausteinen des Typs PESU wie oben definiert oder wenn sowohl Komponente (A) als auch Komponente (E) auf Bausteinen des Typs PPSU wie oben definiert oder wenn sowohl Komponente (A) als auch Komponente (E) auf Bausteinen des Typs PSU wie oben definiert basieren. Unter "basieren" ist in diesem Zusammenhang zu verstehen, dass sowohl Komponente (A) als auch Komponente (E) aus den gleichen Bausteinen aufgebaut sind und sich lediglich dadurch unterscheiden, dass die Komponente (E) zusätzlich funktionalisiert ist und vorzugsweise Monomerbausteine der allgemeinen Formel IV wie oben definiert enthält. Besonders bevorzugt enthalten die Polyarylenether der Komponente (A) und die funktionalisierten Polyarylenether der Komponente (E) jeweils die gleichen Bausteine der allgemeinen Formel I.

Ein geeigneter Bausteine im Rahmen der allgemeinen Formel III ist insbesondere: 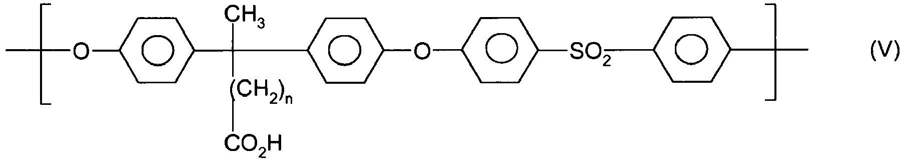 worin n jeweils für eine ganze Zahl von 0 bis 4 steht. Der Baustein V ist ganz besonders bevorzugt.

### Komponente F

Erfindungsgemäß enthalten die thermoplastischen Formmassen mindestens einen oder mehrere, vorzugsweise aber einen Polyarylenether (F) mit im Mittel mindestens 1,5 phenolischen Endgruppen pro Polymerkette. Der Ausdruck "im Mittel" bedeutet dabei ein Zahlenmittel.

Komponente (F) liegt in den erfindungsgemäßen thermoplastischen Formmassen vorzugsweise in Mengen von 0 bis 20 Gew.-%, besonders bevorzugt von 0,1 bis 15 Gew.-%, insbesondere von 1 bis 9 Gew.-%, ganz besonders bevorzugt von 2 bis 8 Gew.-% vor, wobei die Summe der Gewichtsanteile der Komponenten A) bis G) 100 Gew.-% bezogen auf die Formmasse ergibt.

Ohne sich beschränken zu wollen besteht die Vorstellung, dass die Komponente (F) infolge ihres hohen Gehaltes an reaktiven phenolischen Endgruppen als Verträglichkeitsvermittler für die Komponenten (A) bis (B) dient.

Die Herstellung von Polyarylenethern bei gleichzeitiger Steuerung der Endgruppen wird bereits weiter oben unter Komponente (A) beschrieben.

Vorzugsweise weisen die Polyarylenether (F) mindestens 0,15 Gew.-%, insbesondere mindestens 0,18 Gew.-%, besonders bevorzugt mindestens 0,2 Gew.-% phenolische Endgruppen bezogen auf die Gewichtsmenge der Komponente (F), jeweils berechnet als Gewichtsmenge OH, auf. Die mittlere Anzahl der endständigen phenolischen Endgruppen kann mittels Titration bestimmt werden.

Die jeweilige Obergrenze für den Gehalt phenolischer Endgruppen in den Komponenten (F) ergibt sich aus der Zahl der zur Verfügung stehenden Endgruppen pro Molekül (zwei im Fall linearer Polyarylenether) und der zahlenmittleren Kettenlänge. Entsprechende Berechnungen sind dem Fachmann bekannt.

Sofern die erfindungsgemäßen thermoplastischen Formmassen einen Polyarylenether (F) enthalten, so beträgt das Gewichtsverhältnis der Komponente (A) zu Komponente (F) vorzugsweise von 50 zu 1 bis 2 zu 1, insbesondere von 25 zu 1 bis 5 zu 1, besonders bevorzugt von 20 zu 1 bis 10 zu 1.

Vorzugsweise beträgt die mittlere Anzahl der phenolischen Endgruppen der Komponente (F) pro Polymerkette von 1,6 bis 2, insbesondere von 1,7 bis 2, besonders bevorzugt von 1,8 bis 2, ganz besonders bevorzugt von 1,9 bis 2. Die mittlere Anzahl der endständigen phenolischen Endgruppen kann mittels Titration bestimmt werden.

Die Polyarylenether (A) und (F) gemäß der vorliegenden Erfindung können - abgesehen von den Endgruppen - gleich sein oder aus unterschiedlichen Bausteinen aufgebaut sein und/oder ein unterschiedliches Molekulargewicht aufweisen, sofern sie dann noch miteinander vollständig mischbar sind.

Sofern die erfindungsgemäßen thermoplastischen Formmassen einen Polyarylenether (F) enthalten, so ist bevorzugt, wenn die Bestandteile (A) und (F) strukturell eine weitgehende Übereinstimmung aufweisen, insbesondere aus denselben Bausteinen aufgebaut sind und ein ähnliches Molekulargewicht aufweisen, insbesondere das zahlenmittlere Molekulargewicht der einen Komponente höchstens 30% größer ist als das der anderen Komponente.

Polyarylenether sind dem Fachmann als Polymerklasse bekannt. Im Prinzip kommen alle dem Fachmann bekannten und/oder nach bekannten Methoden herstellbaren Polyarylenether als Bestandteil der Komponente (F) in Betracht. Entsprechende Methoden wurden bereits unter Komponente (A) erläutert.

Bevorzugte Polyarylenether (F) sind unabhängig voneinander aus Bausteinen der allgemeinen Formel I (siehe oben) aufgebaut. Besonders bevorzugte Polyarylenethersulfone (F) werden als Polyethersulfon (PESU) bezeichnet. Diese Ausführungsform ist ganz besonders bevorzugt.

Im Allgemeinen weisen die bevorzugten Polyarylenether (F) mittlere Molekulargewichte Mₙ (Zahlenmittel) im Bereich von 5.000 bis 60.000 g/mol und relative Viskositäten von 0,20 bis 0,95 dl/g auf. Die relativen Viskositäten der Polyarylenether werden in 1 gew.-%iger N-Methylpyrrolidon-Lösung bei 25°C nach DIN EN ISO 1628-1 bestimmt.

Die Polyarylenether (F) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Ein bevorzugtes Verfahren zur Herstellung von Polyarylenethern der Komponente (F) wird nachfolgend beschrieben und umfasst folgende Schritte in der Reihenfolge a-b-c:
(a) Bereitstellung mindestens eines Polyarylenethers (F*) in Gegenwart eines Lösungsmittels (L), der eine der gewünschten Komponente (F) entsprechenden Gehalt an phenolischen Endgruppen aufweist, wobei dessen phenolische Endgruppen als Phenolat-Endgruppen vorliegen, und der vorzugsweise aufgebaut ist aus Bausteinen der allgemeinen Formel I wie oben definiert,
(b) Zugabe mindestens einer Säure, vorzugsweise mindestens einer mehrfunktionellen Carbonsäure, und
(c) Gewinnung der Polyarylenether der Komponente (F) als Feststoff.

Die Bereitstellung des Polyarylenethers (F*) erfolgt dabei bevorzugt in Form einer Lösung im Lösungsmittel (L).

Die Bereitstellung der beschriebenen Polyarylenether (F*) kann im Prinzip auf verschiedene Weise erfolgen. Beispielsweise kann ein entsprechender Polyarylenether (F*) direkt mit einem geeigneten Lösungsmittel in Kontakt gebracht und direkt, d. h. ohne weitere Umsetzung, im erfindungsgemäßen Verfahren eingesetzt werden. Alternativ können Präpolymere von Polyarylenethern eingesetzt und zur Umsetzung in Gegenwart eines Lösungsmittels gebracht werden, wobei die beschriebenen Polyarylenether (F*) in Gegenwart des Lösungsmittels entstehen.

Die Bereitstellung des Polyarylenethers oder der Polyarylenether (F*) in Schritt (a) erfolgt jedoch vorzugsweise durch Umsetzung mindestens einer Ausgangsverbindung der Struktur X-Ar-Y (s1) mit mindestens einer Ausgangsverbindung der Struktur HO-Ar¹-OH (s2) in Gegenwart eines Lösungsmittels (L) und einer Base (B), wobei
- Y ein Halogenatom ist,
- X ausgewählt wird aus Halogenatomen und OH und
- Ar und Ar¹ unabhängig voneinander eine Arylengruppe mit 6 bis 18 Kohlenstoffatomen darstellen.

Das Verhältnis von (s1) und (s2) wird dabei so gewählt, dass der gewünschte Gehalt an phenolischen Endgruppen entsteht. Geeignete Ausgangsverbindungen sind dem Fachmann bekannt oder können nach bekannten Methoden hergestellt werden. Hydrochinon, Resorcin, Dihydroxynaphthalin, insbesondere 2,7- Dihydroxynaphthalin, 4,4'-Dihydroxydiphenylsulfon, Bisphenol A und 4,4'-Dihydroxybiphenyl sind als Ausgangsverbindung (s2) besonders bevorzugt.

Es ist jedoch auch möglich, trifunktionelle Verbindungen zu verwenden. In diesem Fall entstehen verzweigte Strukturen. Sofern eine trifunktionelle Ausgangsverbindung (s2) zum Einsatz kommt, ist 1,1,1-Tris(4-hydroxyphenyl)ethan bevorzugt.

Die einzusetzenden Mengenverhältnisse ergeben sich im Prinzip aus der Stöchiometrie der ablaufenden Polykondensationsreaktion unter rechnerischer Abspaltung von Chlorwasserstoff und werden vom Fachmann in bekannter Weise eingestellt. Um jedoch die Zahl der phenolischen OH-Endgruppen zu erhöhen, ist ein Überschuss an (s2) zu bevorzugen.

Besonders bevorzugt beträgt das Molverhältnis (s2)/(s1) in dieser Ausführungsform von 1,005 bis 1,2, insbesondere 1,01 bis 1,15, ganz besonders bevorzugt 1,02 bis 1,1.

Alternativ kann auch eine Ausgangsverbindung (s1) mit X = Halogen und Y = OH eingesetzt werden. In diesem Fall erfolgt die Einstellung eines Überschusses von Hydroxygruppen durch Zugabe der Ausgangsverbindung (s2). In diesem Fall beträgt das Verhältnis der eingesetzten phenolischen Endgruppen zu Halogen vorzugsweise von 1,01 bis 1,2, insbesondere 1,03 bis 1,15, ganz besonders bevorzugt 1,05 bis 1,1.

Vorzugsweise beträgt der Umsatz bei der Polykondensation mindestens 0,9, wodurch ein ausreichend hohes Molekulargewicht gewährleistet wird. Sofern als Vorstufe des Polyarylenethers ein Präpolymer verwendet wird, bezieht sich der Polymerisationsgrad auf die Zahl der eigentlichen Monomere.

Bevorzugte Lösungsmittel (L) sind aprotische polare Lösungsmittel. Geeignete Lösungsmittel weisen außerdem einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, Sulfolan, N-Ethyl-2-pyrrolidon und N-Methyl-2-pyrrolidon.

Vorzugsweise erfolgt die Umsetzung der Ausgangsverbindungen (s1) und (s2) in den genannten aprotischen polaren Lösungsmitteln (L), insbesondere N-Methyl-2-pyrrolidon.

Dem Fachmann ist an sich bekannt, dass die Umsetzung der phenolischen OH-Gruppen vorzugsweise in Gegenwart einer Base (B) erfolgt, um die Reaktivität gegenüber den Halogensubstituenten der Ausgangsverbindung (s1) zu erhöhen.

Vorzugsweise sind die Basen (B) wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist.

Eine besonders bevorzugte Kombination ist N-Methyl-2-pyrrolidon als Lösungsmittel (L) und Kaliumcarbonat als Base (B).

Die Umsetzung der geeigneten Ausgangsverbindungen (s1) und (s2) wird bei einer Temperatur von 80 bis 250°C, bevorzugt 100 bis 220°C durchgeführt, wobei die Obergrenze der Temperatur durch den Siedepunkt des Lösungsmittels begrenzt wird. Die Umsetzung erfolgt vorzugsweise in einem Zeitintervall von 2 bis 12 h, insbesondere von 3 bis 8 h.

Es hat sich als vorteilhaft erwiesen, in Anschluss an Schritt (a) und vor Ausführung des Schrittes (b) eine Filtration der Polymerlösung durchzuführen. Hierdurch wird der bei der Polykondensation gebildete Salzanteil sowie eventuell gebildete Gelkörper entfernt.

Es hat sich zudem als vorteilhaft herausgestellt, im Rahmen von Schritt (a) die Menge des Polyarylenethers (F*) bezogen auf das Gesamtgewicht der Mischung aus Polyarylenether (F*) und Lösungsmittel (L) von 10 bis 70 Gew.-%, vorzugsweise von 15 bis 50 Gew.-% einzustellen.

Im Rahmen von Schritt (b) erfolgt die Zugabe mindestens einer Säure, vorzugsweise mindestens einer mehrfunktionellen Carbonsäure zum Polyarylenether (F*) aus Schritt (a), vorzugsweise zur Lösung des Polyarylenethers (F*) im Lösungsmittel (L).

Auch kann mindestens eine mehrfunktionelle Carbonsäure zum Fällmedium hinzugefügt werden.

Unter "mehrfunktionell" ist eine Funktionalität von mindestens 2 zu verstehen. Die Funktionalität ist die (gegebenenfalls mittlere) Zahl an COOH-Gruppen pro Molekül. Unter mehrfunktionell wird eine Funktionalität von zwei oder höher verstanden. Im Rahmen der vorliegenden Erfindung bevorzugte Carbonsäuren sind di- und trifunktionelle Carbonsäuren.

Die Zugabe der mehrfunktionellen Carbonsäure kann auf verschiedene Weise erfolgen, insbesondere in fester oder flüssiger Form oder in Form einer Lösung, vorzugsweise in einem Lösungsmittel, welches mit dem Lösungsmittel (L) mischbar ist.

Vorzugsweise weist die mehrfunktionelle Carbonsäure ein zahlenmittleres Molekulargewicht von höchstens 1500 g/mol, insbesondere höchstens 1200 g/mol auf. Gleichzeitig weist die mehrfunktionelle Carbonsäure vorzugsweise ein zahlenmittleres Molekulargewicht von mindestens 90 g/mol auf.

Geeignete mehrfunktionelle Carbonsäuren sind insbesondere solche gemäß der allgemeinen Struktur VI:

HOOC-R-COOH (VI),

wobei R ein Kohlenwasserstoffrest mit von 2 bis 20 Kohlenstoffatomen repräsentiert, der optional weitere funktionelle Gruppen, vorzugsweise ausgewählt aus OH und COOH, enthält.

Bevorzugte mehrfunktionelle Carbonsäuren sind C₄ bis C₁₀-Dicarbonsäuren, insbesondere Bemsteinsäure, Glutarsäure, Adipinsäure, und Tricarbonsäuren, insbesondere Zitronensäure. Besonders bevorzugte mehrfunktionelle Carbonsäuren sind Bernsteinsäure und Zitronensäure.

Um eine ausreichende Umwandlung der Phenolat-Endgruppen in phenolische Endgruppen zu gewährleisten hat es sich als vorteilhaft erwiesen, die Menge der eingesetzten mehrfunktionellen Carbonsäure oder mehrfunktionellen Carbonsäuren in Bezug auf die Menge der Phenolat-Endgruppen einzustellen.

Es ist bevorzugt im Rahmen von Schritt (b) eine mehrfunktionelle Carbonsäure in einer Menge von 25 bis 200 mol-% Carboxylgruppen, vorzugsweise von 50 bis 150 mol-% Carboxylgruppen, besonders bevorzugt von 75 bis 125 mol-% Carboxylgruppen, bezogen auf die Stoffmenge an phenolischen Endgruppen zuzugeben.

Wird zu wenig Säure dosiert, ist das Fällverhalten der Polymerlösung ungenügend, während bei einer deutlichen Überdosierung eine Verfärbung des Produktes bei der weiteren Verarbeitung auftreten kann.

Im Rahmen von Schritt (c) erfolgt die Gewinnung des Polyarylenethers (F) als Feststoff. Grundsätzlich kommen verschiedene Verfahren zur Gewinnung als Feststoff in Betracht. Bevorzugt ist jedoch eine Gewinnung der Polymerzusammensetzung durch Ausfällung.

Die bevorzugte Ausfällung kann insbesondere durch Mischung des Lösungsmittels (L) mit einem schlechten Lösungsmittel (L') erfolgen. Ein schlechtes Lösungsmittel ist ein Lösungsmittel, in dem sich die Polymerzusammensetzung nicht löst. Ein solches schlechtes Lösungsmittel ist vorzugsweise ein Gemisch aus einem Nicht-Lösungsmittel und einem Lösungsmittel. Ein bevorzugtes Nicht-Lösungsmittel ist Wasser. Ein bevorzugtes Gemisch (L') aus einem Lösungsmittel mit einem Nicht-Lösungsmittel ist vorzugsweise ein Gemisch aus dem Lösungsmittel (L), insbesondere N-Methyl-4-pyrrolidon, und Wasser. Es ist bevorzugt, die Polymerlösung aus Schritt (b) zu dem schlechten Lösungsmittel (L') hinzuzugeben, was zur Ausfällung der Polymerzusammensetzung führt. Dabei wird vorzugsweise ein Überschuss des schlechten Lösungsmittels eingesetzt. Besonders bevorzugt erfolgt die Zugabe der Polymerlösung aus Schritt (a) in fein verteilter Form, insbesondere in Tropfenform.

Sofern als schlechtes Lösungsmittel (L') eine Mischung aus dem Lösungsmittel (L), insbesondere N-Methyl-2-pyrrolidon, und einem Nicht-Lösungsmittel, insbesondere Wasser, verwendet wird, dann ist ein Mischungsverhältnis Lösungsmittel: Nicht-lösungsmittel von 1:2 bis 1:100, insbesondere 1:3 bis 1:50 zu bevorzugen.

Als schlechtes Lösungsmittel (L') ist eine Mischung aus Wasser und N-Methyl-2-pyrrolidon (NMP) in Kombination mit N-Methyl-2-pyrrolidon als Lösungsmittel (L) bevorzugt. Besonders bevorzugt ist als schlechtes Lösungsmittel (L') ein Gemisch NMP/Wasser von 1:3 bis 1:50, insbesondere 1:30.

Die Ausfällung erfolgt besonders effizient, wenn der Gehalt der Polymerzusammensetzung im Lösungsmittel (L) bezogen auf das Gesamtgewicht der Mischung aus Polymerzusammensetzung und Lösungsmittel (L) von 10 bis 50 Gew.-%, vorzugsweise von 15 bis 35 Gew.-% beträgt.

Komponente (F) weist vorzugsweise einen Kaliumgehalt von höchstens 600 ppm auf. Der Kaliumgehalt wird mittels Atomspektrometrie bestimmt.

### Komponente G

Die erfindungsgemäßen Formmassen kann Komponente (G) Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher. Komponente (G) umfasst allerdings kein Graphit.

Der Anteil der Komponente (G) in der erfindungsgemäßen Formmasse beträgt insbesondere von 0 bis 40, vorzugsweise von 0 bis 30 Gew.-%, insbesondere 0 bis 20 Gew.-%, bezogen auf das Gesamtgewicht der Komponenten (A) bis (G). Falls die Komponente (G) Stabilisatoren beinhaltet, beträgt der Anteil dieser Stabilisatoren üblicherweise bis zu 2 Gew.-%, vorzugsweise 0,01 bis 1 Gew.-%, insbesondere 0,01 bis 0,5 Gew.-%, wobei die Summe der Gewichtsanteile der Komponenten A) bis G) 100 Gew.-% bezogen auf die Formmasse ergibt.

Pigmente und Farbstoffe sind allgemein in Mengen von 0 bis 6, bevorzugt von 0,05 bis 5 und insbesondere von 0,1 bis 3 Gew.-%, bezogen auf die Summe der Gew.-% der Komponenten (A) bis (G), enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind dem Fachmann bekannt.

Oxidationsverzögerer und Wärmestabilisatoren, die den thermoplastischen Formmassen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder Iodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Summe der Gew.-% der Komponenten (A) bis (G) einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf die Summe der Gew.-% der Komponenten (A) bis (G) zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Bevorzugt enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf die Summe der Gew.-% der Komponenten (A) bis (G)) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren kann Komponente (G) auch Stearate beinhalten. Stearate können entweder durch Umsetzung entsprechender Natriumsalze mit Metallsalzlösungen (zum Beispiel CaCl₂, MgCl₂, Aluminiumsalze) oder durch direkte Umsetzung der Fettsäure mit Metallhydroxid hergestellt werden (siehe zum Beispiel Baerlocher Additives, 2005). Bevorzugt wird Aluminiumtristearat verwendet.

Als weitere Zusatzstoffe kommen auch so genannte Nukleierungsmittel, wie beispielsweise Talkum, in Betracht.

### Herstellung der Formmasse

Die Reihenfolge, in der die Komponenten (A) bis (G) gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextruder, vorzugsweise Zweischneckenextruder, Brabender-Mischer, Banbury-Mischer oder Kneter mischt und anschließend extrudiert. Nach der Extrusion wird das Extrudat abgekühlt und zerkleinert. Die Reihenfolge der Mischung der Komponenten kann variiert werden. Entsprechend können zwei oder mehr als zwei Komponenten vorgemischt werden, es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 bis 30 Minuten bei Temperaturen von 290 bis 380°C, bevorzugt 300 bis 370°C, erforderlich. Nach der Extrusion wird das Extrudat in der Regel abgekühlt und zerkleinert.

Beispiele typischer erfindungsgemäßer Formmassen sind der folgenden Tabelle zu entnehmen.

| Formmasse | A | B | C | D | E | F | G |
|---|---|---|---|---|---|---|---|
| 1 | 40 | 15 | 40 | 5 | - | - | - |
| 2 | 35 | 20 | 40 | 5 | - | - | - |
| 3 | 30 | 25 | 40 | 5 | - | - | - |
| 4 | 25 | 30 | 40 | 5 | - | - | - |
| 5 | 50 | 8 | 37 | 5 | - | - | - |
| 6 | 30 | 20 | 40 | 5 | 5 | - | - |
| 7 | 30 | 20 | 40 | 5 | - | 5 | - |
| 8 | 30 | 20 | 40 | 5 | 2,5 | 2,5 | |
| 9 | 35 | 20 | 42,5 | 2,5 | - | - | - |
| 10 | 35 | 20 | 37,5 | 7,5 | - | - | - |

| Formmasse | Bsp.1 in Gew.-% | Bsp.2 in Gew.-% | Bsp.3 in Gew.-% | Bsp.4 in Gew.-% | | | |
|---|---|---|---|---|---|---|---|
| A: Polyethersulfon, Schmelzeviskosität 200 - 280 Pa s | 10 - 50 | 14 - 45 | 20 - 45 | 30 - 45 | | | |
| B: Polyphenylensulfid, Schmelzeviskosität 60 - 100 Pa s | 5 - 44,5 | 5 - 30 | 5 - 20 | 10 - 20 | | | |
| C: Schnittglasfasern, Stapellänge 2 - 4,5 mm | 10 - 65 | 15 - 65 | 15 - 60 | 15 - 50 | | | |
| D: Graphit, Elastizität 70 - 120%, spez. Oberfläche 10 -18% | 0,5 - 20 | 1 - 18 | 1 - 15 | 3 - 10 | | | |
| E: Polyethersulfon, Viskositätszahl mindestens 46 ml/g | 0 - 20 | 0,1 - 15 | 0,1 - 10 | 2 - 8 | | | |
| F: Polyethersulfon, M_{w} 18.000 bis 100.000 g/mol | 0 - 20 | 0,1 - 15 | 1 - 9 | 2 - 8 | | | |

### Verwendungen

Die erfindungsgemäßen thermoplastischen Formmassen können vorteilhaft zur Herstellung von Fasern, Folien, Schäumen oder Formkörpern verwendet werden. Die erfindungsgemäßen thermoplastischen Formmassen eignen sich insbesondere zur Herstellung von Formteilen für Haushaltsartikel, elektrische oder elektronische Bauteile sowie zur Herstellung von Formkörpern für den Fahrzeugsektor, insbesondere Automobil.
Die mechanischen Eigenschaften der erfindungsgemäßen thermoplastischen Formmasse begünstigen die Verwendung der thermoplastischen Formmasse zur Herstellungen von Fasern, Folien und/oder Formkörpern. Insbesondere eignet sich die thermoplastische Zusammensetzung für die Herstellung von speziellen Formkörpern im Fahrzeug und Gerätebau zum Beispiel für industrielle oder Verbraucher nahe Zwecke. So kann die thermoplastische Formmasse zur Produktion von Elektronikteilen, Gehäusen, Gehäuseteilen, Abdeckklappen, Dämpfungselementen, Federn, Griffen, Ladeluftrohren, Abdeckungen, Luftkanäle, Lufteinlassgitter, Ventilteilen verwendet werden.

Die folgenden Beispiele erläutern die Erfindung näher, ohne sie einzuschränken.

### ISO-Normen

DIN ISO 527: Kunststoffe - Bestimmung der Zugeigenschaften - Teil 1: Allgemeine Grundsätze (ISO 527-1:1993 einschließlich Corr 1: 1994); Deutsche Fassung EN ISO 527-1:1996

DIN ISO 179: Kunststoffe - Bestimmung der Charpy-Schlageigenschaften - Teil 2: Instrumentierte Schlagzähigkeitsprüfung (ISO 179-2:1997); Deutsche Fassung EN ISO 179:1999.

DIN EN ISO 1628-1: Kunststoffe - Bestimmung der Viskosität von Polymeren in verdünnter Lösung durch ein Kapillarviskosimeter - Teil 1: Allgemeine Grundlagen (ISO 1628-1:2009); Deutsche Fassung EN ISO 1628-1:2009

DIN EN ISO 1043-1: Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002.

DIN ISO 9277: Bestimmung der spezifischen Oberfläche von Feststoffen durch Gasadsorption nach dem BET-Verfahren (ISO 9277:1995).

### Allgemeine Anmerkungen

Die E-Moduli, die Reißfestigkeit und die Reißdehnung der Proben wurden im Zugversuch nach DIN ISO 527 an Schulterstäben ermittelt.

Die Schlagzähigkeit der Glasfasern enthaltenden Produkte wurde an ISO-Stäben nach DIN ISO 179 1eU bestimmt.

Die Schmelzeviskosität wurde mittels eines Kapillarrheometers bestimmt. Dabei wurde die scheinbare Viskosität bei 380°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1000 Hz bestimmten Werte. Die Messung wurde für eine Stunde fortgeführt. Angegeben ist der Quotient aus dem Messwert nach einer Stunde und dem Ausgangswert.

Die Viskositätszahl der Polyarylenether wurde in 1 %-iger Lösung von N-Methylpyrrolidon bei 25°C gemäß DIN EN ISO 1628-1 bestimmt.

Die Elastizität des Graphits wurde in einem metallischen Zylinder gemessen, in dem der Graphit unter einem Druck von 5 bis 70 MPa komprimiert wurde. Die Höhe der Graphitsäule unter Druckbelastung und nach Entspannung wurde gemessen, daraus wurde die Elastizität berechnet (siehe oben).

Die Partikelgrößenverteilung wurde mittels Laserbeugung in einer hochverdünnten Suspension bestimmt. Als Messgerät wurde das Gerät Beckmann LS13320 eingesetzt.

Die BET-Oberfläche wurde gemäß DIN ISO 9277 bestimmt.

### Komponente A

Als Komponente A wurde ein Polyethersulfon mit einer Viskositätszahl von 49,0 ml/g (Ultrason^{®} E 1010 der BASF SE) verwendet. Das verwendete Produkt wies 0,19 Gew.-% Cl-Endgruppen und 0,23 Gew.-% OCH₃-Endgruppen auf. Die bei 350°C/1150 s⁻¹ bestimmte scheinbare Schmelzeviskosität beträgt 263 Pa s.

### Komponente B

Als Komponente B wurde ein Polyphenylensulfid mit einer Schmelzeviskosität von 76 Pa s bei 350°C und einer Scherrate von 1150 s⁻¹ verwendet.

### Komponente C

Als Komponente C wurden Schnittglasfasern mit einer Stapellänge von 4,5 mm und einem Faserdurchmesser von 10 µm eingesetzt die mit einer Polyurethanschlichte versehen waren.

### Komponente D1

Als Komponente D1 wurde ein Graphit verwendet mit einer Elastizität von 90%, mit 95% Partikeln kleiner als 50 µm und einer spezifischen Oberfläche von 16,1 m²/g. Der d50-Wert für die Partikelgröße beträgt: 9 µm

### Komponente D2

Als Komponente D2 wurde ein Graphit verwendet mit einer Elastizität von 30%, mit 95% Partikeln kleiner als 40 µm und einer spezifischen Oberfläche von 20,6 m²/g. Der d50-Wert für die Partikelgröße beträgt: 9,5 µm

### Komponente E

Als Komponente E wurde ein Polyethersulfon verwendet, welches wie folgt hergestellt wurde:

Unter Stickstoffatmosphäre wurden 577,03 g Dichlordiphenylsulfon, 495,34 Dihydroxydiphenylsulfon und 5,73 g 4,4'-Bis-hydroxyphenylvaleriansäure in 1053 ml NMP gelöst und mit 297,15 g wasserfreiem Kaliumkarbonat versetzt. Die Reaktionsmischung wurde auf 190 °C erhitzt und 6 h bei dieser Temperatur gehalten. Anschließend wurde der Ansatz mit 1947 ml NMP verdünnt. Nach Abkühlen auf eine Temperatur kleiner als 80°C wurde die Suspension abgelassen. Durch Filtration wurden die unlöslichen Bestandteile abgetrennt. Die erhaltene Lösung wurde in Wasser gefällt. Das erhaltene weiße Pulver wurde mehrfach mit heißem Wasser extrahiert und anschließend bei 140°C im Vakuum getrocknet. Der Anteil an DPA-Einheiten wurde zu 0,9 mol.-% bestimmt, die Viskositätszahl des Produkts war 46,9 ml/g.

### Komponente F

Als Komponente F wurde ein Polyethersulfon mit einer Viskositätszahl von 55,6 ml/g verwendet, welches 0,20 Gew.-% OH-Endgruppen und 0,02 Gew.-% Cl-Endgruppen aufwies.

### Komponente X

Als Komponente X wurde ein Ethylen-Methylmethacrylat-Glycidylmethacrylat-Terpolymer der Zusammensetzung 67/25/8 (in Gew.-%) mit einem MFI 6 g / 10 min (190 °C/2,16 kg) eingesetzt (Kautschuk Lotader AX8900).

### Messergebnisse

| Versuch | V1 | 2 | 3 | V4 | V5 | 6 | V7 | 8 | V9 | V10 | 11 | V12 |
|---|---|---|---|---|---|---|---|---|---|---|---|---|
| | | | | | | | | | | | | |
| Komponente | | | | | | | | | | | | |
| | | | | | | | | | | | | |
| A | 41 | 41 | 41 | 41 | 36 | 36 | 36 | 36 | 55 | 55 | 55 | 66 |
| B | 14 | 14 | 14 | 14 | 14 | 14 | 14 | 14 | 20 | 20 | 20 | 19 |
| C | 45 | 42 | 40 | 40 | 45 | 42 | 42 | 42 | 20 | 17 | 17 | - |
| D1 | - | 3 | 5 | - | - | 3 | - | 3 | - | - | 3 | - |
| D2 | - | - | - | 5 | - | - | 3 | - | - | 3 | - | - |
| E | - | - | - | - | 5 | 5 | - | - | 5 | 5 | 5 | 10 |
| F | | | | | | | 5 | 5 | - | - | - | - |
| X | - | - | - | - | - | - | - | - | - | - | - | 5 |
| | | | | | | | | | | | | |
| Eigenschaften | | | | | | | | | | | | |
| | | | | | | | | | | | | |
| E-Modul [GPa] | 16,5 | 16,3 | 16,1 | 16,2 | 16,5 | 16,3 | 16,2 | 16,4 | 7,2 | 7,1 | 7,1 | 2,5 |
| Reißdehnung [%] | 1,4 | 1,4 | 1,4 | 1,2 | 1,9 | 1,8 | 1,5 | 1,5 | 2,1 | 2,1 | 2,2 | 24 |
| Reißfestigkeit [MPa] | 148 | 146 | 143 | 134 | 161 | 156 | 143 | 150 | 112 | 110 | 113 | 72 |
| ISO 179 1eU [kJ/m²] | 42 | 42 | 40 | 33 | 52 | 48 | 38 | 43 | 112 | 110 | 113 | 72 |
| Schmelzstabilität bei 380 °C | >100 | 5,4 | 3,3 | 6,5 | >100 | 5,3 | 8,7 | 4,3 | >20 | 9,2 | 3,1 | >20 |

## Patentansprüche

1. Thermoplastische Formmasse enthaltend
A) von 10 bis 50 Gew.-% mindestens eines Polyarylenethers mit im Mittel höchstens 0,5 phenolischen Endgruppen pro Polymerkette und ohne Carboxygruppen,
B) von 5 bis 44,5 Gew.-% mindestens eines Polyphenylensulfids,
C) von 10 bis 65 Gew.-% mindestens eines faser- und/oder teilchenförmigen Füllstoffs
D) von 0,5 bis 20 Gew.-% eines elastischen Graphits mit einer Elastizität von 60 bis 130%
E) von 0 bis 20 Gew.-% mindestens eines Polyarylenethers umfassend Carboxygruppen,
F) von 0 bis 20 Gew.-% mindestens eines Polyarylenethers mit im Mittel mindestens 1,5 phenolischen Endgruppen pro Polymerkette und ohne Carboxygruppen,
G) von 0 bis 40 Gew.-% mindestens eines Zusatzstoffs
wobei die Summe der Gewichtsanteile der Komponenten A) bis G) 100 Gew.-% bezogen auf die Formmasse ergibt.

2. Thermoplastische Formmasse nach Anspruch 1 wobei der Polyarylenether A) eine scheinbare Schmelzviskosität bei 350 °C/1150 s⁻¹ von 150 bis 300 Pa s aufweist.

3. Thermoplastische Formmasse nach Anspruch 1 oder 2 wobei der Polyarylenether A) eine Viskositätszahl von 0,20 bis 0,95 dl/g gemessen nach DIN EN ISO 1628-1 aufweist.

4. Thermoplastische Formmasse nach mindestens einem der Ansprüche 1 bis 3 wobei als Polyarylenether A) ein Polyethersulfon mit im Mittel höchstens 0,5 phenolischen Endgruppen pro Polymerkette und ohne Carboxygruppen verwendet wird.

5. Thermoplastische Formmasse nach mindestens einem der Ansprüche 1 bis 4 wobei der Polyphenylensulfid B) eine scheinbare Schmelzviskosität bei 350 °C/1150 s⁻¹ von 40 bis 200 Pa s aufweist.

6. Thermoplastische Formmasse nach mindestens einem der Ansprüche 1 bis 5 wobei als Komponente C) Glasfasern verwendet werden.

7. Thermoplastische Formmasse nach mindestens einem der Ansprüche 1 bis 7 wobei als Komponente D) ein Graphit mit einem d50-Wert für die Partikelgröße von weniger als 20 µm.

8. Thermoplastische Formmasse nach mindestens einem der Ansprüche 1 bis 8 wobei als Komponente D) ein Graphit eingesetzt wird, der ausschließlich Partikel umfasst, die kleiner als 100 µm sind.

9. Thermoplastische Formmasse nach mindestens einem der Ansprüche 1 bis 9 wobei als Polyarylenether E) ein Polyethersulfon umfassend Carboxygruppen verwendet wird.

10. Thermoplastische Formmasse nach mindestens einem der Ansprüche 1 bis 10 wobei der Polyarylenether E) eine Viskositätszahl von 40 bis 65 ml/g gemessen nach DIN EN ISO 1628-1 aufweist.

11. Thermoplastische Formmasse nach mindestens einem der Ansprüche 1 bis 11 wobei als Polyarylenether F) ein Polyethersulfon mit im Mittel mindestens 1,5 phenolischen Endgruppen pro Polymerkette und ohne Carboxygruppen verwendet wird.

12. Verwendung der thermoplastischen Formmasse gemäß mindestens einem der Ansprüche 1 bis 12 zur Herstellungen von Fasern, Folien oder Formkörpern.

13. Fasern, Folien oder Formkörper enthaltend eine thermoplastische Formmasse gemäß mindestens einem der Ansprüche 1 bis 12.

## Claims

1. A thermoplastic molding composition comprising
A) from 10 to 50% by weight of at least one polyarylene ether having an average of at most 0.5 phenolic end groups per polymer chain and having no carboxy groups,
B) from 5 to 44.5% by weight of at least one polyphenylene sulfide,
C) from 10 to 65% by weight of at least one fibrous and/or particulate filler,
D) from 0.5 to 20% by weight of an elastic graphite with elasticity of from 60 to 130%,
E) from 0 to 20% by weight of at least one polyarylene ether comprising carboxy groups,
F) from 0 to 20% by weight of at least one polyarylene ether having an average of at least 1.5 phenolic end groups per polymer chain and having no carboxy groups, and
G) from 0 to 40% by weight of at least one additive
where the sum of the propotions by weight of components A) to G) is 100% by weight, based on the molding composition.

2. The thermoplastic molding composition according to claim 1, where the apparent melt viscosity at 350°C/1150 s⁻¹ of the polyarylene ether A) is from 150 to 300 Pa s.

3. The thermoplastic molding composition according to claim 1 or 2, where the intrinsic viscosity of the polyarylene ether A) is from 0.20 to 0.95 dl/g, measured to DIN EN ISO 1628-1.

4. The thermoplastic molding composition according to at least one of claims 1 to 3, where the polyarylene ether A) used comprises a polyether sulfone having an average of at most 0.5 phenolic end groups per polymer chain and having no carboxy groups.

5. The thermoplastic molding composition according to at least one of claims 1 to 4, where the apparent melt viscosity at 350°C/1150 s⁻¹ of the polyphenylene sulfide B) is from 40 to 200 Pa s.

6. The thermoplastic molding composition according to at least one of claims 1 to 5, where glass fibers are used as component C).

7. The thermoplastic molding composition according to at least one of claims 1 to 7, where a graphite with d50 particle size of less than 20 µm is used as component D).

8. The thermoplastic molding composition according to at least one of claims 1 to 8, where a graphite comprising exclusively particles measuring less than 100 µm is used as component D).

9. The thermoplastic molding composition according to at least one of claims 1 to 9, where a polyether sulfone comprising carboxy groups is used as polyarylene ether E).

10. The thermoplastic molding composition according to at least one of claims 1 to 10, where the intrinsic viscosity of the polyarylene ether E) is from 40 to 65 ml/g, measured to DIN EN ISO 1628-1.

11. The thermoplastic molding composition according to at least one of claims 1 to 11, where the polyarylene ether F) used comprises a polyether sulfone having an average of at least 1.5 phenolic end groups per polymer chain and having no carboxy groups.

12. The use of the thermoplastic molding composition according to at least one of claims 1 to 12 for producing fibers, foils, or moldings.

13. A fiber, foil, or molding comprising a thermoplastic molding composition according to at least one of claims 1 to 12.

## Revendications

1. Masse de moulage thermoplastique, contenant
A) 10 à 50% en poids d'au moins un polyarylène-éther présentant en moyenne au plus 0,5 groupe terminal phénolique par chaîne polymère et sans groupes carboxy,
B) 5 à 44,5% en poids d'au moins un poly (sulfure de phénylène),
C) 10 à 65% en poids d'au moins une charge sous forme de fibres et/ou de particules,
D) 0,5 à 20% en poids d'un graphite élastique présentant une élasticité de 60 à 130%,
E) 0 à 20% en poids d'au moins un polyarylène-éther comprenant des groupes carboxy,
F) 0 à 20% en poids d'au moins un polyarylène-éther présentant en moyenne au moins 1,5 groupe terminal phénolique par chaîne polymère et sans groupes carboxy,
G) 0 à 40% en poids d'au moins un additif,
la somme des proportions pondérales des composants A) à G) valant 100% en poids par rapport à la masse de moulage.

2. Masse de moulage thermoplastique selon la revendication 1, le polyarylène-éther A) présentant une viscosité apparente en masse fondue à 350°C/1150 s⁻¹ de 150 à 300 Pa.s.

3. Masse de moulage thermoplastique selon la revendication 1 ou 2, le polyarylène-éther A) présentant un indice de viscosité de 0,20 à 0,95 dl/g, mesuré selon la norme DIN EN ISO 1628-1.

4. Masse de moulage thermoplastique selon au moins l'une quelconque des revendications 1 à 3, une polyéthersulfone présentant en moyenne au plus 0,5 groupe terminal phénolique par chaîne polymère et sans groupes carboxy étant utilisée comme polyarylène-éther A).

5. Masse de moulage thermoplastique selon au moins l'une quelconque des revendications 1 à 4, le poly(sulfure de phénylène) B) présentant une viscosité apparente en masse fondue à 350°C/1150 s⁻¹ de 40 à 200 Pa.s.

6. Masse de moulage thermoplastique selon au moins l'une quelconque des revendications 1 à 5, des fibres de verre étant utilisées comme composant C).

7. Masse de moulage thermoplastique selon au moins l'une quelconque des revendications 1 à 7, un graphite présentant une valeur d50 pour la grosseur des particules inférieure à 20 µm étant utilisé comme composant D).

8. Masse de moulage thermoplastique selon au moins l'une quelconque des revendications 1 à 8, un graphite comprenant exclusivement des particules inférieures à 100 µm étant utilisé comme composant D).

9. Masse de moulage thermoplastique selon au moins l'une quelconque des revendications 1 à 9, une polyéthersulfone comprenant des groupes carboxy étant utilisée comme polyarylène-éther E).

10. Masse de moulage thermoplastique selon au moins l'une quelconque des revendications 1 à 10, le polyarylène-éther E) présentant un indice de viscosité de 40 à 65 ml/g, mesuré selon la norme DIN EN ISO 1628-1.

11. Masse de moulage thermoplastique selon au moins l'une quelconque des revendications 1 à 11, une polyéthersulfone présentant en moyenne au moins 1,5 groupe terminal phénolique par chaîne polymère et sans groupes carboxy étant utilisée comme polyarylène-éther F).

12. Utilisation de la masse de moulage thermoplastique selon au moins l'une quelconque des revendications 1 à 12 pour des fabrications de fibres, de feuilles ou de corps moulés.

13. Fibres, feuilles ou corps moulés contenant une masse de moulage thermoplastique selon au moins l'une quelconque des revendications 1 à 12.
